# EUROPEAN PATENT SPECIFICATION

(11) **EP 3 344 430 B1**
(45) Date of publication and mention of the grant of the patent: **27.01.2021**
(21) Application number: 16779178.9
(22) Date of filing: 28.08.2016
(51) Int. Cl.: B29C 45/00

(54) **METHOD AND MOLD OF INTEGRATED INJECTION MOLDING AND IN- MOLD-ASSEMBLY**
VERFAHREN UND WERKZEUG ZUM INTEGRIERTEN SPRITZGIESSEN UND IN-WERKZEUG MONTAGE
PROCÉDÉ ET MOULE POUR MOULAGE PAR INJECTION ENTEGRÉ AVEC ASSEMBLAGE DANS LE MOULE

(30) Priority: 03.09.2015 IT UB20153391
(43) Date of publication of application: 11.07.2018
(73) Proprietor: ERMO, 53102 Mayenne (FR)
(72) Inventor: BAZZO, Maurizio, 31020 San Polo di Piave (TV) (IT); BOSCARIOL, Tiziano, 31020 San Polo di Piave (TV) (IT)
(74) Representative: Cabinet Le Guen Maillet
(86) International application number: PCT/IB2016/055134
(87) International publication number: WO 2017/037603

(56) References cited:
- WO-A1-89/10313
- JP-A- 2000 238 090
- US-A- 4 280 976

## Description

The invention relates to a molding method, and to a mold for carrying it out, operating with In-Mold-Assembly technology (IMA). The method, the mold are particularly advantageous for molding multi-component objects, even more in particular objects constituted of two pieces, like e.g. plastic caps.

In the molding of plastic components, especially those intended for food packaging or household use, a recent response to the need of reducing costs and space is In-mold-Assembly technology (IMA). The assembly of molded pieces occurs directly in the mold before the expulsion, thus scale economy, quality of the pieces and reliability of the assembly take full benefit. In the case of caps for bottles or phials, molding simultaneously and at the same both the body and the cap allows optimizing the process in terms of cycle time and overall dimensions.

US 2012/0131780 describes an example of an IMA technology mold, wherein a translating carriage moves linearly a mold section to place it on top of another section, in order to couple two molded pieces. But in this way only certain types of pieces can be coupled, for example caps so-called "snap-fit" characterized by a final linear movement during assembly.

WO 2014/068069 describes an assembly operation comprising a screwing action performed by an robot external to the mold. Unfortunately, the robot adds a high cost and considerable bulk to the mold, and slows down the production cycle, in clear opposition to the trend of simplification and optimization of IMA technology.

US-A-4,280,976, JP-A-2000/238090 and WO-A-89/10313 discloses molding method, and a mold for molding multi-component objects.

Therefore there lacks an adequate method to assemble efficiently and internally to a mold two or more molded parts, in particular two parts screwable on each other.

It is desired then to obviate to one or more of the aforesaid problems with a method or mold as in the attached claims, in which the dependent ones define advantageous variants.

To that end, the present invention concerns a method for molding and assembling in the same mold an object formed by at least two pieces, comprising the steps of
(i) molding a first piece with a first thread in a first cavity of a section of the mold
(ii) molding a second piece with a second thread in a second cavity of a block of the mold and on a shaft of the mold,
(iii) moving in translation the block to extract the second piece of the second cavity,
(iv) moving in translation the section so that the first piece is positioned on the second piece,
(v) rotating the shaft in order to screw the first thread and the second thread together.

Advantageously, the first piece is molded on a second shaft, the translation of the fourth step is composed of a first translation to separate the second shaft and the first piece, a second translation to move the section with the first piece in order to align the axis of the first piece and the axis of the second piece, and a third translation to move the first piece on the second piece.

The invention concerns also a mold comprising:
- a section with a first cavity to mold a first piece with a first thread,
- a block with a second cavity to mold a second piece with a second thread,
- a shaft the extremity of which is inside the second cavity so that the second piece is molded on said extremity,
wherein the block is movable in translation to extract the second piece of the second cavity,
wherein the section is movable in translation to position the first piece on the second piece,
wherein the shaft is movable in rotation to screw the first thread and the second thread together.

The advantages of the invention will be made still clearer by the following description of a method and preferred mold, wherein reference is made to the accompanying drawing wherein:
Figures 1-6 show simplified top views of the main parts of a mold during subsequent phases of molding and assembly of two pieces;
Figure 7 shows a zoomed view of the circle CI of Fig. 3;
Figure 8 shows a zoomed view of two molded and assembled pieces.

In the figures same reference numerals indicate same elements, which, to not crowd the drawings, are sometimes unreferenced.

A general method is to mold and assemble in the same mold an object formed by at least two pieces, comprising the steps of
(i) molding the two pieces within the same mold by means of injection of material in two different cavities (e.g. cavities set side by side);
(ii) moving a section of the mold, such section containing a piece, so that such piece is positioned on the second piece (e.g. by translation),
(iii) rotating a section of the mold, such section containing a piece, so that such piece rotates relative to the other piece about an axis passing through the two pieces, in such a way that following the rotation the two pieces end up coupled together.

By section here it is meant generically a part or fraction of the mold, without limitation to planar components. Only preferably section indicates a component permanently coupled to the mold.

In step (ii) a piece can be moved by extracting it from the mold or by moving a section of the mold, such section containing the piece to be moved.

Phase (ii) and/or (iii) may be carried out by moving a section of the mold through internal mechanisms or coupled to the mold, or through said external means, e.g. gripping and positioning means external to the mold (in particular a robot external to the mold). Said external means is particularly advantageous if step (ii) is implemented by moving a piece extracting it from the mold.

For a mold according to the invention, for moving a or each of said sections known mechanisms can be used, e.g. like the one described in US 2012/0131780.

In the system for moving a or each of said sections said external means is used. Note that the mold belonging to said system may comprise one or each mold variant here described or defined.

A preferred embodiment, because it is simple and robust, envisages that said rotating section comprises or consists of a shaft or sleeve rotatably mounted in or on the mold.

The rotation in step (iii) serves to bring the two pieces closer and enable their assembly, e.g. inducing
a joint between male and female parts present in the two pieces,
a bayonet fitting,
a snap fitting or
an interlocking by interposition of parts.

Note how this new type of movement opens up new assembly possibilities for molded parts with IMA technology.

The method, the mold and the system are particularly advantageous if said two pieces comprise or consist of:
a threaded piece, e.g. but not exclusively a threaded cap, and
a corresponding counter-threaded second piece, e.g. a body or a bottleneck or a phialneck (in particular a threaded bush), on which the first piece is screwable.

The threads of the two pieces, usually having polar symmetry, develop with helical path about a respective axis, and the rotation in step (iii), which occurs in this case about the axes of the threads, can then serve to screw (the threads of) the two pieces one on the other.

Advantageously the method further provides in the case of screwing the specific steps of:
moving a section of the mold so as to make in step (ii) the two pieces approach each other until the contact between the two respective threads is obtained. Although optional, this step ensures greater assembly speed and accuracy because it exploits step (ii) to shorten the execution time of phase (iii); and/ or
moving a section of the mold so that in step (ii) the two pieces approach until the axes of their two respective threads align; and/or
rotating in step (iii) a section of the mold about the axis of a thread so that the relative piece rotates relative to the other piece, and, following the rotation, the threads of the two pieces are screwed one on the other; and/or
translating a section of the mold in order to bring the two pieces closer to each other along the common (and aligned) axis of the respective threads simultaneously with the rotation in step (iii), in order to accompany and facilitate the screwing of the two pieces. For short threads and/or for threads made of very elastic material this step may be omitted.

Preferably after step (iii) the method envisages to expel the screwed assembly of the two pieces, to finish the production cycle and shorten it at most.

Another general aspect is - as said - a mold. The latter is adapted to form two separate cavities in which plastic material is injected to mold two pieces, the mold comprising
- a first movable section for containing the first piece, and
- a second movable section for containing the second piece,
wherein a section is displaceable on the other section (e.g. trough translation) so that a piece is positioned above the other piece (preferably making contact thereto), and
a section is rotatable so that the respective piece rotates relative to the other piece about an axis passing through the two pieces, so that following the rotation the two pieces end up coupled together.

Particularly, as mold variants:
the two cavities may have a shape such as to mold two threaded pieces: a first threaded piece and a corresponding counter-threaded second piece, e.g. a body or a bottleneck or a phailneck, on which the second piece is screwable. Preferably the two cavities have geometry such as to mold the two pieces with a shape having polar symmetry and with threads developing with helical path about a respective axis; and / or
the movable section is movable or able to move so as to make the two pieces approach until the contact between the two respective threads is obtained, and/or
the movable section is movable or able to move so as to make the two pieces approach until the two respective threads are aligned, and/or
the rotable section is movable or able to perform a rotation about the axis of a thread so that the relative piece rotates relatively to the other piece and, following the rotation, the threads of the two pieces are screwed one on the other; and/ or
the rotable section and the movable section are translatable in order to approach each other, and to then get the two pieces closer to each other along the common axis of the respective threads, simultaneously with the rotation of the rotatable section, in order to accompany and facilitate the screwing of the two pieces.

A preferred embodiment, because simple and robust, envisages that said rotating section comprises or consists of a shaft or a sleeve rotatably mounted in or on the mold.

The section that rotates in step (iii) may coincide with the section translating in step (ii) or not.

Namely, in step (ii) and/ or (iii), and/ or in any relevant sub-phases, only one section containing a piece may be moved, leaving the other section still and therefore leaving the other piece fixed, or the sections containing the two pieces may be moved simultaneously to obtain coordinated relative displacements.

Advantageously, the rotatable section may be mounted on a rotatable shaft internal to the mold, wherein the rotation axis of the shaft coincides with the axis of a thread of a piece (when molded). The piece is preferably present at one end of the shaft. Such shaft may also be translatable along its axis to make the rotatable section also translatable toward the section that contains the other piece, or the shaft may also be translatable along its axis thanks to the translation of a mold section. The mold may contain the shaft on bearings thereby allowing only its rotation (without possibility to translate) .

A method, a mold or a system according to the invention are advantageously applicable:
to the production of closing elements for containers through the rotation of a threaded cap on a counter- threaded bushing; and/or
also in the case of multi-cavity molds, i.e. when n bodies and n caps are simultaneously molded, to then move them all together and assemble them at once to by screwing.

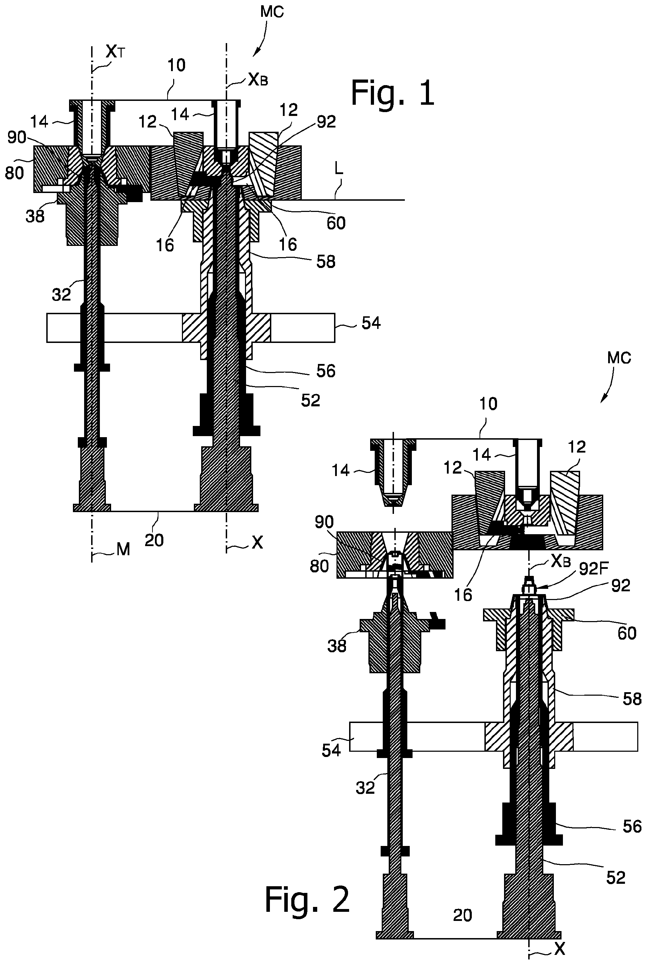

A mold MC internally comprises (Fig. 1) a block or section 10, a block or section 20 and a translatable section 80. Parts irrelevant for the explanation are omitted from the drawings, for simplicity.

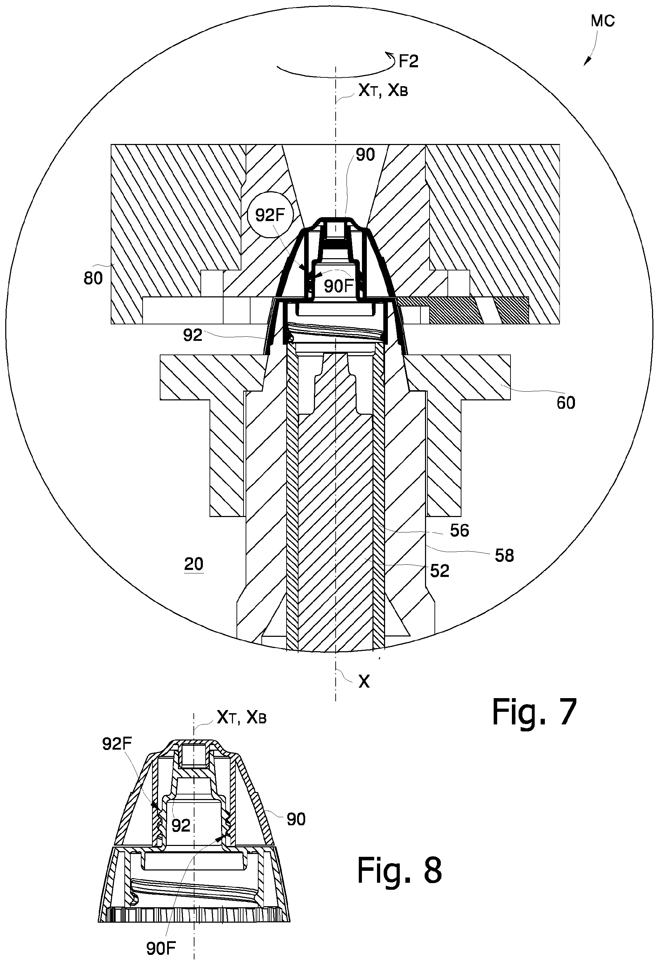

The block 20 and the section 80, and the block 20 and the block 10, are mutually translatable and joinable along a plane L (Fig. 1) for delimiting respectively two closed cavities into which to mold, through nozzles 14, respectively, a threaded lid 90 (e.g. a cap) with thread 90F and a counter- threaded body 92 (e.g. a bushing) with thread 92F (see also Fig. 7 and 8) . In the example, the lid 90 has a nearly ogival section with an inner, central cylindrical cavity (with axis X_{T}), above which runs the thread 90F. The body 92 comprises a cylindrical part (with axis X_{B}) on the lateral surface of which there is present the thread 92F (see fig. 7) . Said inner cylindrical cavity has dimensions complementary to said cylindrical part.

Nothing prevents to exchange the position of the lid 90 and the body 92, and/or to reverse the location of their threads 90F, 92F (if internal one is molded instead external or vice versa), or to mold indifferently a thread as negative-recessed and the other in relief.

In block 10 there are wedges 12 that can slide on inclined planes to push and move radially some plates 16 having at one end a semi-cylindrical matrix to mold half of the thread 92 F.

Due to the rotational symmetry of the threads 92F, 90F, for them (and in the example also for the pieces themselves they belong to) an axis is definable about which they develop, axes respectively denoted by X_{T} and X_{B}. In the example the axes X_{T} and X_{B} also coincide substantially with the direction of injection of the plastic material into the nozzles 14 toward the aforementioned cavities.

The base and the interior of the body 92 rest on a support present on a surface of the block 20. Such support, starting from the center radially outwards, comprises telescopic elements being coaxial with each other, in particular a retractable shaft 52 and two coaxial and concentric sleeves 56, 58, both surrounded on the outside by an axially translatable collar 60. In the example the axis of the shaft 52, the sleeves 56, 58, and the collar 60 is indicated with X and coincides with the axis X_{B}.

Advantageously, the support for the body 92 is rotatable about the axis X and can be actuated on command.

The base and the inside of the lid 90 rest on a pyramid-shaped pedestal 38 present on a surface of the block 20 and in the example placed next to the support of the body 92. Such pedestal is massive and at the center comprises a pin or shaft 32 which has axis M parallel to the axis X and which is translatable along its axis M.

In the block 20 there is a plate 54 which can translate along the axis X to move axially the sleeve 58 with respect to the block 20, the shaft 52 and the sleeve 56. The purpose is pushing the collar 60 to the outside of the block 20.

Note that the displacement of the parts in the mold MC takes place through known means, and for simplicity they are not shown.

### OPERATION

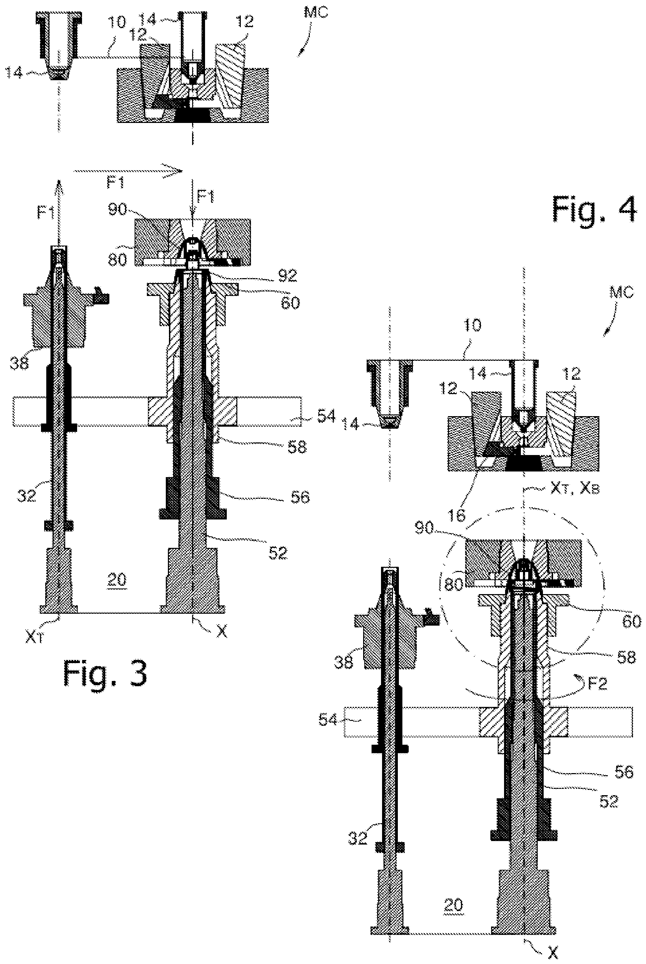

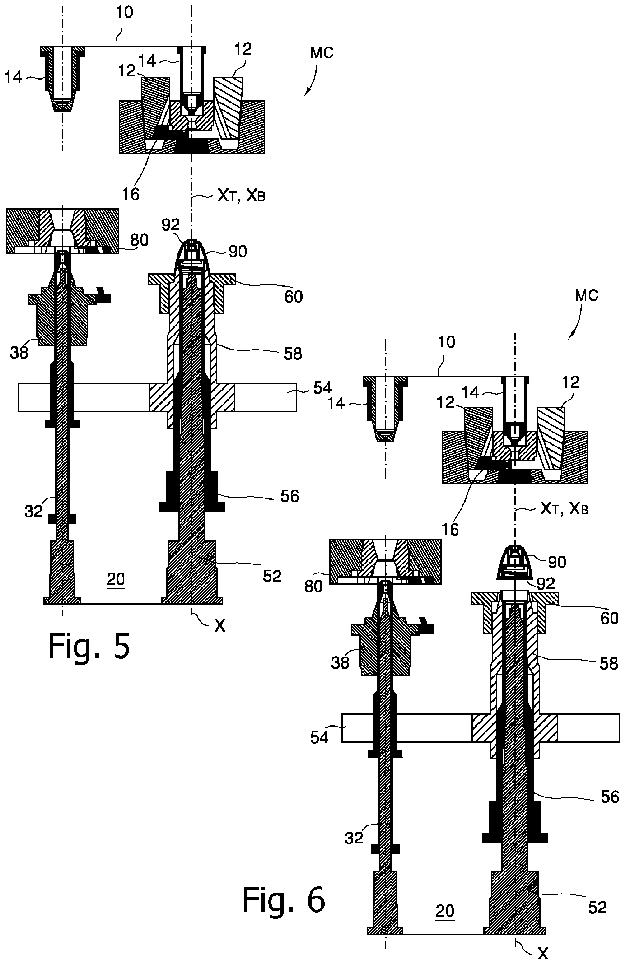

Below the preferred process steps for the mold MC:
1. The assembly process of the pieces begins after completing the injection of material in the two cavities, where such pieces are molded: in the example the lid 90 and the body 92. The blocks 10, 20 and the section 80 are now joined and pressed together (Figure 1) along the plane L.
2. The blocks 10, 20 are then separated (Figure 2) . This is permitted in particular by the effect of the wedges 12, which by crawling on the inclined planes have moved away the plates 16 of the body 92, so as to uncover and release the thread 92 F. That is to say that the sliding of the wedges 12 has resulted in the separation of the plates 16 and thus the release of the molded thread of the body 92 from the respective undercut generating its cavity. At the same time the shaft or pin 32 has been moved towards the block 10 to maintain the lid 90 in its cavity and against the section 80, thereby avoiding its falling.
3. The section 80, up to now motionless with respect to the block 10, is translated (arrows F1 in Figure 3) in such a way to align the axes X_{T} and X_{B} and bring the threads 90F, 92F into mutual contact. Essentially the sections of the mold are moved so that the threaded draft of the body 92 overlaps and fits with the beginning of the thread 90F.
4. The support of the body 92 is then set into rotation (Figure 4 and arrow F2) by rotating the sleeve 58 about the axis X. In synchronous manner the plate 54 moves towards the section 80 as much as the threads 90F, 92F engage in one another. The end result is that the shaft 52 detaches from the body 92, retreating inside the block 20, and the body 92 is pushed progressively into screwing inside the lid 90 by the sleeves 56, 58.
5. With a process inverse to previous point 3 (Figure 5), the section 80 returns to the starting position above the pedestal 38 for a new injection.
6. The collar 60 is moved axially (Figure 6) away from the block 20 and from the block 10, and this causes the expulsion of the screwed pieces 90, 92.
7. The blocks 10, 20 are re-brought closer and re-brought into contact, and the cycle starts again.

## Claims

1. Method for molding and assembling in the same mold (MC) an object formed by at least two pieces (90, 92), comprising the steps of
(i) molding a first piece (90) with a first thread (90F) in a first cavity of a section (80) of the mold
(ii) molding a second piece (92) with a second thread (92F) in a second cavity of a block (10) of the mold and on a shaft (52) of the mold,
(iii) moving in translation the block (10) to extract the second piece (92) of the second cavity,
(iv) moving in translation the section (80) so that the first piece (90) is positioned on the second piece (92),
(v) rotating the shaft (52) in order to screw the first thread (90F) and the second thread (92F) together.

2. Method according to Claim 1, **characterized in that** the first piece (90) is molded on a second shaft (32), **in that** the translation of the step (iv) is composed of a first translation (F1 up) to separate the second shaft (32) and the first piece (90), a second translation (F1 horizontal) to move the section (80) with the first piece (90) in order to align the axis of the first piece (90) and the axis of the second piece (92), and a third translation (F1 down) to move the first piece on the second piece (92).

3. Mold (MC) comprising:
- a section (80) with a first cavity to mold a first piece (90) with a first thread (90F),
- a block (10, 12, 14, 16) with a second cavity to mold a second piece (92) with a second thread (92F),
- a shaft (52) the extremity of which is inside the second cavity so that the second piece (92) is molded on said extremity,
wherein the block (10) is movable in translation to extract the second piece (92) of the second cavity,
wherein the section (80) is movable in translation to position the first piece (90) on the second piece (92),
wherein the shaft (52) is movable in rotation to screw the first thread (90F) and the second thread (92F) together.

## Patentansprüche

1. Verfahren zum Formen und Montieren in derselben Form (MC) eines Objekts, das durch mindestens zwei Teile (90, 92) ausgebildet ist, die folgenden Schritte umfassend:
(i) Formen eines ersten Teils (90) mit einem ersten Gewinde (90F) in einem ersten Hohlraum eines Abschnitts (80) der Form,
(ii) Formen eines zweiten Teils (92) mit einem zweiten Gewinde (92F) in einem zweiten Hohlraum eines Blocks (10) der Form und auf einer Welle (52) der Form,
(iii) Verschieben des Blocks (10), um das zweite Teil (92) aus dem zweiten Hohlraum zu entnehmen,
(iv) Verschieben des Abschnitts (80), sodass das erste Teil (90) auf dem zweiten Teil (92) angeordnet wird,
(v) Drehen der Welle (52), um das erste Gewinde (90F) und das zweite Gewinde (92F) miteinander zu verschrauben.

2. Verfahren nach Anspruch 1, **dadurch gekennzeichnet, dass** das erste Teil (90) auf eine zweite Welle (32) geformt ist, dass das Verschieben des Schritts (iv) aus einer ersten Verschiebung (F1 auf), um die zweite Welle (32) und das erste Stück (90) voneinander zu trennen, einer zweiten Verschiebung (F1 horizontal), um den Abschnitt (80) mit dem ersten Teil (90) zu bewegen, um die Achse des ersten Teils (90) und die Achse des zweiten Teils (92) auszurichten, und einer dritten Verschiebung (F1 ab), um das erste Teil auf das zweite Teil (92) zu bewegen, besteht.

3. Form (MC), Folgendes umfassend:
- einen Abschnitt (80) mit einem ersten Hohlraum, um ein erstes Teil (90) mit einem ersten Gewinde (90F) zu formen,
- einen Block (10, 12, 14, 16) mit einem zweiten Hohlraum, um ein zweites Teil (92) mit einem zweiten Gewinde (92F) zu formen,
- eine Welle (52), deren Extremität sich innerhalb des zweiten Hohlraums befindet, sodass das zweite Teil (92) auf die Extremität geformt wird,
wobei der Block (10) verschiebbar ist, um das zweite Teil (92) aus dem zweiten Hohlraum zu entnehmen,
wobei der Abschnitt (80) verschiebbar ist, um das erste Teil (90) auf dem zweiten Teil (92) anzuordnen,
wobei die Welle (52) drehbar ist, um das erste Gewinde (90F) und das zweite Gewinde (92F) miteinander zu verschrauben.

## Revendications

1. Procédé pour mouler et assembler dans le même moule (MC) un objet formé d'au moins deux pièces (90, 92), comprenant les étapes consistant à
(i) mouler une première pièce (90) avec un premier filet (90F) dans une première cavité d'une section (80) du moule
(ii) mouler une seconde pièce (92) avec un second filet (92F) dans une seconde cavité d'un bloc (10) du moule et sur un arbre (52) du moule,
(iii) déplacer en translation le bloc (10) pour extraire la seconde pièce (92) de la seconde cavité,
(iv) déplacer en translation la section (80) de sorte que la première pièce (90) soit positionnée sur la seconde pièce (92),
(v) faire tourner l'arbre (52) afin de visser ensemble le premier filet (90F) et le second filet (92F).

2. Procédé selon la revendication 1, **caractérisé en ce que** la première pièce (90) est moulée sur un second arbre (32), **en ce que** la translation de l'étape (iv) est composée d'une première translation (F1 vers le haut) pour séparer le second arbre (32) et la première pièce (90), d'une seconde translation (F1 horizontale) pour déplacer la section (80) avec la première pièce (90) afin d'aligner l'axe de la première pièce (90) et l'axe de la seconde pièce (92), et d'une troisième translation (F1 vers le bas) pour déplacer la première pièce sur la seconde pièce (92).

3. Moule (MC) comprenant :
une section (80) avec une première cavité pour mouler une première pièce (90) avec un premier filet (90F),
un bloc (10, 12, 14, 16) avec une seconde cavité pour mouler une seconde pièce (92) avec un second filet (92F),
un arbre (52) dont l'extrémité se trouve à l'intérieur de la seconde cavité de sorte que la seconde pièce (92) soit moulée sur ladite extrémité,
le bloc (10) étant mobile en translation pour extraire la seconde pièce (92) de la seconde cavité,
la section (80) étant mobile en translation pour positionner la première pièce (90) sur la seconde pièce (92),
l'arbre (52) étant mobile en rotation pour visser ensemble le premier filet (90F) et le second filet (92F).
